# EUROPEAN PATENT APPLICATION

(11) **EP 4 328 823 A1**
(43) Date of publication of application: **28.02.2024**
(21) Application number: 22191443.5
(22) Date of filing: 22.08.2022
(51) Int. Cl.: G06Q 10/08, B60L 53/60, G06Q 20/32

(54) **ENERGY EXCHANGE SYSTEM**

(71) Applicant: VOLVO TRUCK CORPORATION, 405 08 Göteborg (SE)
(72) Inventor: MAITRE, Julien, 38200 Chuzelles (FR); QUIBRIAC, Yann, 69007 Lyon (FR)
(74) Representative: Zacco Sweden AB

(57) **Abstract**

A computer-implemented method for automatically electronically billing an energy exchange between a vehicle 10 and a vehicle accessory 12 is disclosed. The method may be performed at the vehicle or vehicle accessory and comprises detecting (102) the type of vehicle 10 or vehicle accessory 12, enabling (104) energy transfer between one or more energy stores 14 of the vehicle 10 and one or more energy store 16 of the vehicle accessory 12 in one or both directions, measuring (106) the amount of transferred energy and calculating (108) the cost for the transferred energy, for example, by transmitting, by the vehicle (10) or vehicle accessory (12), using one or more wireless data communication links (22a, 22b), an indication of the measured amount of transferred energy to a remote server (20) and at the remote server (20) receiving from each of the vehicle and vehicle accessory, a transmitted indication of the measured amount of transferred energy, calculating the cost for the vehicle and vehicle accessory based on the received indication of the amount of transferred energy in a given time period for each of the vehicle and the vehicle accessory; and transmitting an indication of the cost to each party associated with either the vehicle and/or the vehicle accessory.

## Description

The present disclosure relates to an energy exchange system where energy, for example, in the form of electrical energy or hydrogen fuel cell energy, is transferred between vehicles and connected vehicle accessories, such as trailers and containers and the like and related aspects.

In particular, but not exclusively, the present disclosure relates to an energy exchange system providing bi-directional energy transfers, for example, of electrical energy and/or hydrogen fuel, between, and related connection services for, heavy-duty vehicles and their vehicle accessories, such as, for example, tractors and trailers or other power storing connectable and dis-connectable equipment. Examples of related connection services may comprise the measurement of an energy transfer in one or both directions between the vehicle and the vehicle accessory, and a cost of the energy transfer and its automatic billing to any involved party.

The method is particularly useful for electric vehicles which are automated in some way, for example, they may be autonomous or semi-autonomous and/or remote-controlled. The disclosed invention will be described mainly with respect to electric and hybrid vehicles, however, such vehicles may include heavy-duty vehicles, such as semi-trailer vehicles and trucks as well as other types of vehicles.

Some embodiments of the disclosed technology measure/count energy transfers between multiple vehicle(s) and vehicle accessory(ies) arranged in a convoy so that the energy transfer within the convoy can be billed automatically to the relevant parties associated with each member of the convoy which takes energy from another element in the convoy.

### BACKGROUND

As more and more vehicles rely on on-board battery and/or hydrogen cell power to fuel their propulsion systems, a problem exists as the range of vehicles, particularly vehicles which are pulling a heavy load, is limited and frequent stops to recharge are required.

Existing systems are able to measure in real-time and bill off-line (not in real-time) usage of grid power sources to recharge vehicle fuel stores. These systems often use, for example, unit costs which are one-hour spot window costs and not true "real time" cost. Alternatively, between a charging station and a vehicle costs may be billed when a vehicle is charging but not when the vehicle is driving. There is currently a need for a consistent system for managing and charging for energy transfers to a vehicle regardless of whether the vehicle is stationary when it is charged or moving.

The disclosed technology seeks to mitigate, obviate, alleviate, or eliminate various issues known in the art which can limit the range of a vehicle.

### SUMMARY STATEMENTS

Whilst the invention is defined by the accompanying claims, various aspects of the disclosed technology including the claimed technology are set out in this summary section with examples of some preferred embodiments and indications of possible technical benefits.

A first aspect of the disclosed technology comprises a computer-implemented method for automatically electronically billing an energy exchange between a vehicle and a vehicle accessory, where the method comprises, for example, at one or more of the vehicle, the vehicle accessory, and a remote server, enabling energy transfer between one or more energy stores of the vehicle and one or more energy store of the vehicle accessory in one or both directions, measuring the amount of transferred energy; and calculating the cost for the transferred energy.

Advantageously, the method allows for energy transfers to be made both when a vehicle is moving and when it is stationary. In some embodiments, the cost is calculated in real-time, and may be negotiated in real-time prior to or during the energy exchange.

In some embodiments, the vehicle accessory is a trailer or a container.

In some embodiments, the enabling energy transfer is responsive to the vehicle or the vehicle accessory detecting an energy transfer connection capable of transferring energy between the vehicle and the vehicle accessory has been formed between the vehicle and the vehicle accessory.

In some embodiments, measuring the amount of transferred energy comprises monitoring the number of recharge events and corresponding energy transfers between the vehicle and the vehicle accessory in each direction.

In some embodiments, the method further comprises, prior to calculating the cost of the transferred energy, detecting energy transfer has been disabled between the vehicle and the vehicle accessory in one or both directions.

In some embodiments, detecting energy transfer has been disabled between the vehicle and the vehicle accessory in one or both directions comprises determining that the energy transfer connection has been broken between the vehicle and vehicle accessory.

In some embodiments, calculating the cost for the transferred energy further comprises transmitting, by the vehicle or vehicle accessory, using one or more wireless data communication links, an indication of the measured amount of transferred energy to a remote server, and, at the remote server: receiving from each of the vehicle and vehicle accessory, a transmitted indication of the measured amount of transferred energy calculating the cost for the vehicle and vehicle accessory based on the received indication of the amount of transferred energy in a given time period for each of the vehicle and the vehicle accessory, and initiating an electronic payment energy transaction by transmitting an indication of the cost to each party associated with either the vehicle and/or the vehicle accessory.

In some embodiments, the indication comprises an energy transactions which is certified and stored in the remote server.

In some embodiments, the energy transactions are certified using a suitable block-chain.

In some embodiments, the vehicle comprises a heavy-duty vehicle and the vehicle accessory is a heavy-duty vehicle accessory which comprises one or more of a trailer and a container. In some embodiments, one or more heavy-duty vehicles and one or more vehicle accessories are arranged in series so that a vehicle or accessory is able to exchange energy with more than one other vehicle and/or vehicle accessory.

Another, second, aspect of the disclosed technology relates to a vehicle configured to implement a method according to the first aspect or any one of its disclosed embodiments.

Another, third aspect of the disclosed technology relates to a vehicle accessory configured to implement a method according to the first aspect or any one of its disclosed embodiments.

Another, fourth, aspect of the disclosed technology relates to a server configured to receive from each of a vehicle and a vehicle accessory, a transmitted indication of a measured amount of energy transferred between the vehicle and vehicle accessory in either direction, and calculate the cost for the vehicle and vehicle accessory based on the received indication of the amount of transferred energy in a given time period for each of the vehicle and the vehicle accessory, and transmit an indication of the cost to each entity associated with either the vehicle and/or the vehicle accessory.

In some embodiments, the vehicle comprises a vehicle according to the second aspect or any one of its disclosed embodiments and the vehicle accessory comprises a vehicle accessory according the third aspect or any one of its disclosed embodiments.

Another, fifth, aspect of the disclosed technology comprises an energy exchange system for automatically billing bi-directional exchanges of energy occurring over a predetermined time interval to one or more entities, the system comprising at least one vehicle according to the second aspect or any one of its disclosed embodiments, at least one vehicle accessory according to the third aspect or any one of its disclosed embodiments; and a server according the fourth aspect or any one of its disclosed embodiments.

In some embodiments, the energy exchange system further comprises for each vehicle and each accessory an associated entity and wherein the server is configured to transmit an indication of the cost to at least one, both or all entities at the end of each predetermined time interval and requests electronic settlement.

In some embodiments, the server may be configured to initiate an electronic payment transaction between two or more than two different entities, each different entity associated with one or more vehicles or vehicle accessories. In some embodiments, energy may be transferred between two non-adjacent members of a convoy of three or more convoy members, where a convoy member includes at least one leading / guiding vehicle. In some embodiments, the electronic payment transaction may be associated with energy transfer between at least one of the one or more vehicles or vehicle accessories of an entity.

Another, sixth, aspect of the disclosed technology comprises a computer program product comprising computer-code which when loaded from memory and executed by one or more processors of a control circuit of a vehicle or vehicle accessory, causes the vehicle and vehicle accessory to implement a method according to the first aspect or any one of its disclosed embodiments.

Another aspect of the disclosed technology comprises a computer-readable storage medium comprising computer-program code which, when executed by one or more processors or processing circuitry of an apparatus, causes the apparatus to implement a method according to the first aspect or any one of its disclosed embodiments.

In some embodiments, the apparatus comprises one or more of a vehicle, a vehicle accessory and a server.

A computer program carrier carrying a computer program comprising computer-program code, which, when loaded from the computer program carrier and executed by one or more processors or processing circuitry of an apparatus causes the apparatus to implement a method according to the first aspect or any one of its disclosed embodiments, wherein the computer program carrier is one of an electronic signal, optical signal, radio signal or computer-readable storage medium.

In some embodiments, the apparatus comprises one or more of a vehicle, a vehicle accessory and a server.

The disclosed aspects and embodiments may be combined with each other in any suitable manner which would be apparent to someone of ordinary skill in the art.

### BRIEF DESCRIPTION OF THE DRAWINGS

Some embodiments of the disclosed technology are described below with reference to the accompanying drawings which are by way of example only and in which:
Figure 1 schematically illustrates an energy exchange system comprising a vehicle and accessory according to some embodiments of the disclosed technology;
Figure 2 schematically illustrates an example of a method for automatically electronically billing an energy exchange between a vehicle and a vehicle accessory of according to some embodiments of the disclosed technology; and
Figure 3 shows an example of an apparatus according to some embodiments of the disclosed technology.

### DETAILED DESCRIPTION

Aspects of the present disclosure will be described more fully hereinafter with reference to the accompanying drawings. The apparatus and method disclosed herein can, however, be realized in many different forms and should not be construed as being limited to the aspects set forth herein. Steps, whether explicitly referred to a such or if implicit, may be re-ordered or omitted if not essential to some of the disclosed embodiments. Like numbers in the drawings refer to like elements throughout.

The terminology used herein is for the purpose of describing particular aspects of the disclosure only, and is not intended to limit the disclosed technology embodiments described herein. As used herein, the singular forms "a", "an" and "the" are intended to include the plural forms as well, unless the context clearly indicates otherwise.

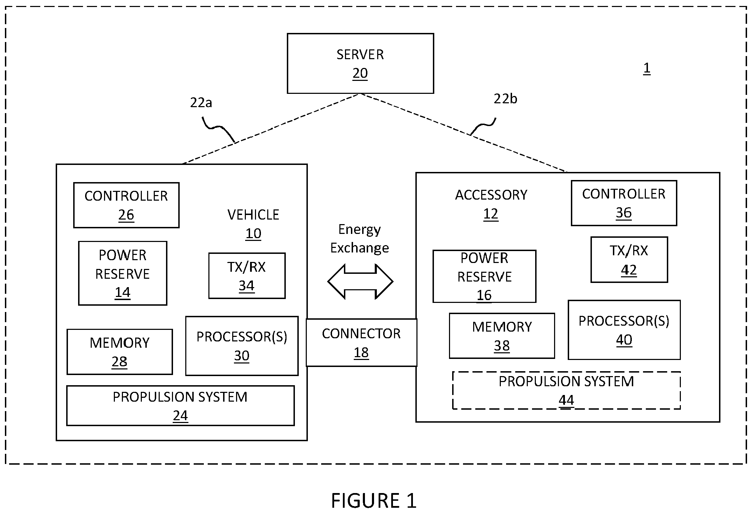

Figure 1 shows schematically an energy exchange system 1 comprising a vehicle 10 and a vehicle accessory 12 each having renewable power reserves 16 and 18 respectively The rechargeable power reserves may, for example, comprise batteries such as lithium batteries, hydrogen fuel cells and the like or other forms of storable electrical energy. Also shown in Figure 1 is a server 20 which is capable of communicating with the vehicle 10 and/or accessory 12, for example, to exchange data relating to an energy transfer exchange and/or related connection services. Figure 1 shows only one vehicle 10 and only one vehicle accessory 12 however, in some embodiments, a plurality of vehicle accessories may be connected to one or more vehicles in a convoy. Server 20 may be configured to one or more of vehicle(s) and/or vehicle accessories.

As shown in Figure 1, the vehicle 10 comprises an energy store, also referred to herein as a power reserve, 14 which may for example comprise a hydrogen fuel cell or similar means of storing energy for driving the propulsion system 24 of the vehicle under the control of control circuitry or controller 26. The vehicle 10 also comprises one or more types of memory 28 and one or more types of processor(s) or processing circuitry 30 as well as a suitable antenna system for receiving and transmitted data over one or more wireless communication links, for example, wireless communication link 22a with server 20 as shown in Figure 1. Vehicle 10 also comprises a suitable connector termination point for connector 18 which is configured to allow bidirectional exchange of energy from the energy stores 14 with vehicle accessory 12.

The vehicle may be a fully electric or hybrid electric vehicle and may use a power reserve or energy store 14 comprising one or more batteries, for example, lithium batteries or hydrogen fuel cell(s) or other type of portable fuel depending on its propulsion system 24 in some embodiments. In some embodiments, the vehicle may be an autonomous or semi-autonomous or remote controlled vehicle, for example, a vehicle with an advanced driving system, ADS, configured to make tactical decisions for a control system. The vehicle may be a heavy-duty vehicle. A heavy-duty vehicle may comprise a wide range of different physical devices, such as combustion engines, electric machines, friction brakes, regenerative brakes, shock absorbers, air bellows, and power steering pumps. These physical devices are commonly known as Motion Support Devices (MSD). The MSDs may be individually controllable, for instance such that friction brakes may be applied at one wheel, i.e., a negative torque, while another wheel on the vehicle, perhaps even on the same wheel axle, is simultaneously used to generate a positive torque by means of an electric machine. The autonomous operation of a heavy-duty vehicle is accordingly more complex than the autonomous operation of a more light-weight vehicle such as a car.

The vehicle accessory 12, for example, a container and/or trailer or other type of connectable vehicle accessory, comprises at least one energy store or power reserve 16 which is sufficiently of the same type to allow an energy exchange with vehicle 10 via a suitable wired energy transfer connection, such as a cable or cables or the like, or via a wireless energy transfer connection in some embodiments. The embodiment of the vehicle accessory 12 shown in Figure 1 has a controller 36, one or more types of memory 38, and one or more processor(s) or processing circuitry 40 in some embodiments. Vehicle accessory 12 may also have a its own propulsion system in some embodiments, and in some embodiments, for example, if the vehicle accessory 12 is a trailer, this may also be capable of being moved or guided independently of vehicle 10 in some embodiments and so may have its own propulsion system 44. Accessory 12 may also be provided with a suitable transceiver for sending and/or receiving wireless data communications, for example, directly via wireless link 22b with server 20 or indirectly via the vehicle 10, in which case the data may be provided over the same physical infrastructure link as the energy transfer in some embodiments.

In some embodiments, one or more heavy-duty vehicles and one or more vehicle accessories are arranged in series so that a vehicle or accessory is able to exchange energy with more than one other vehicle and/or vehicle accessory. This allows vehicle and accessory convoys to transfer energy to collectively exchange their range.

In particular, the disclosed technology may allow vehicles and vehicle accessories using relatively new propulsion technologies such as hydrogen fuel cells and electricity which may take long time to charge fuel stores on board the vehicle/accessory from being able to start journeys without being fully changed and to extend their range accordingly as they can borrow energy from each other whilst moving. Vehicle accessories such as trailers which have embedded batteries or hydrogen tanks can accordingly store fuel which the vehicle pulling the vehicle accessory can draw upon whilst driving to widen the complete convoy range. In other words a vehicle such as a heavy-duty vehicle like a tractor can widen its range by taking the energy from an attached vehicle accessory such as a trailer. The vehicle accessory such as a trailer or container can, moreover, be charged at a dock even when the tractor is not present. So for example, a tractor can pick up one or more trailer(s) and be already drive and take the energy from the trailer even if the energy stores of tractor itself are close to empty in term of the amount of energy they are storing on board. This saves the tractor charging time and can improve transportation efficiency. Another example is when the vehicle accessory consumes high amount of energy, for example, if the vehicle accessory is an electrically cooled trailer, where the vehicle accessory could take the energy from the tractor.

The energy exchange system implemented by the vehicle and the vehicle accessory also includes an automated billing system as an owner of the vehicle may not be the same as the owner of the vehicle accessory, and the disclosed technology further includes an electronic payment transaction system to count and bill units of energy transferred between a vehicle and one or more vehicle accessories and/or other vehicles in some embodiments.

The energy which is exchanged between vehicles may take any suitable form, including but not limited to hydrogen, gas, or electricity or cold or hot fluid, for example, for battery conditioning in some embodiments.

In some embodiments, the energy exchange system comprises a vehicle and a disconnectable and separately chargeable vehicle accessory, for example, a trailer, container or other equipment having an interface to exchange energy with at least one other vehicle or vehicle accessory. Measuring the amount of transferred energy can be implemented using any suitable apparatus known in the art, for example, a meter (gas or electric for instance) on a least one vehicle and/or vehicle accessory. The energy exchange may be mono-directional in some embodiments, in other words, it may not be possible for the vehicle to charge the vehicle accessory in some embodiments, only for the vehicle accessory to charge the vehicle. In some embodiments each of the vehicle(s) and the vehicle accessory(s) are connectable and can either produce, consume or store energy.

Each of the vehicle(s) and the vehicle accessory(s) are connectable to a charging/plugin/ or gas or fluid filling source depending on the fuel they consume. Each vehicle is also provided with a suitable antenna/receiver/transceiver arrangement to communicate with a remote server, for example, with a cloud/back office in the case where the vehicle(s) and vehicle accessory(ies) form a fleet configured to communicate and/or be controlled by the back-office/cloud server.

In some embodiments, the vehicle and/or vehicle accessory are configured to detect the connection/disconnection of the energy transfer media between themselves. Based on this either or both of the vehicle and/or vehicle accessory may automatically measure energy transfer in both directions between the vehicle and/or vehicle accessories tractor and the trailer(s) in both direction, for example they may monitor the number of charging transfers and the amount of energy transferred and its direction of transfer in each direction, after which any energy meter monitoring and measuring the transfer may be reset, ready for the next transfer of energy which may be in the same or a different direction and with the same or a different connected vehicle if arranged in a convoy. The remote server 20 and/or each of the vehicle and vehicle accessory may store measurement results over periods or between events. Limits may be set to conserve energy from being transferred in some embodiments, for example, energy transfer may be enabled or disabled by the remote server 20 in one or both directions between a vehicle and a vehicle accessory or the vehicles themselves may be configured to prevent energy from being received and/or transferred in some embodiments. The amount of energy transferred in each direct may also be displayed on the vehicle/vehicle accessory as well as made visible at the remote server 20. This allows quick and easy monitoring of the energy transfers and energy reserves which may help prevent loss of energy in the form of energy leaks between a vehicle and another vehicle accessory. In some embodiments, the cost calculation of the energy is performed on each of the vehicle, the vehicle accessory, and in some embodiments, also or instead at the remote server 20.

In some embodiments, the cost of the energy is calculated independently on both the tractor and the trailer(s), the energy cost is then adjusted to take into account any bi-directional energy flows. The energy cost can also be centrally adjusted for all vehicles and/or vehicle accessories in a fleet by the server 20 in some embodiments. The server 20 may accordingly provide or support local and remote readout of data/status, reset, monitor, diagnostic, control. The energy cost can be negotiated in a centralized way between different fleets or within fleets having different owners of vehicles and/or vehicle accessories, and the server 20 can, based on the net energy transferred send electronic invoices to the relevant owners/their devices so at to allow for an electronic payment transaction for the energy transfer to automatically occur. In some embodiments, the transactions can be certified using a blockchain to improve security and to allow automatic settlement to be made without human input being necessary to approve the transaction prior to transferring funds to settle the electronic payment.

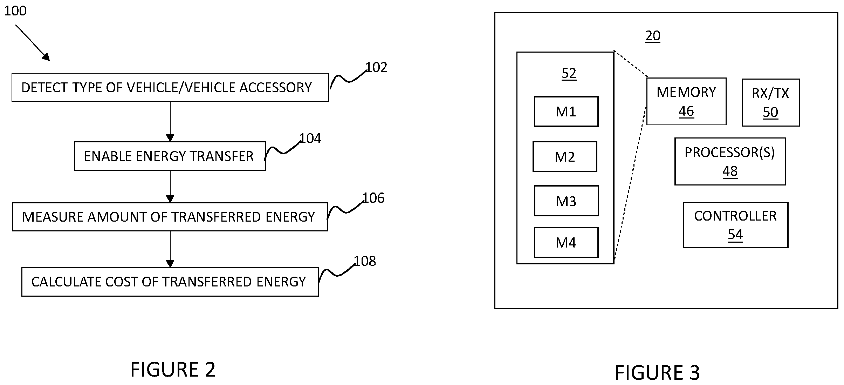

Figure 2 of the drawings show schematically an example embodiment of a method 100 for automatically electronically billing an entity for an exchange of energy between a vehicle 10 and a vehicle accessory 12 is shown may be implemented by the vehicle 10 or the vehicle accessory 12 or at the server 20 according to various embodiments of the disclosed technology. In Figure 1, the method 100 comprises a computer-implemented method for automatically electronically billing an energy exchange between at least one vehicle 10 and at least one vehicle accessory 12, where the method comprises, at the vehicle 10 or vehicle accessory 12, or remotely at the server 20, detecting in 102 the type of vehicle 10 or vehicle accessory 12, enabling energy transfer in 104 between one or more energy stores 14 of the vehicle 10 and one or more energy stores 16 of the vehicle accessory 12 in one or both directions, measuring in 106 the amount of transferred energy, and calculating 108 the cost for the transferred energy.

In some embodiments, the vehicle accessory is a trailer or a container. The energy exchange may be when the vehicle and accessory are moving or stationary. In some embodiments, the at least one vehicle and at the at least one vehicle accessory may be connected to exchange energy whilst moving together in a convoy or when connected together but when the convoy is stationary. Examples of containers which include power sources such as batteries etc. include refrigerated or heated or other sorts of thermally controlled containers, or containers with screens on the side. In some embodiments, a vehicle may be connected to two or more vehicle accessories at the same time, for example, a vehicle may be able to send and/or receive energy transferred from both a connected trailer and a connected container.

In some embodiments, the method further comprises initiating an electronic payment energy transaction by transmitting an indication of the cost to a server and/or directly to an electronic device of an entity associated with either the vehicle and/or the vehicle accessory

In some embodiments, the enabling energy transfer (104) is responsive to the vehicle or the vehicle accessory detecting an energy transfer connection (18) capable of transferring energy between the vehicle and the vehicle accessory has been formed between the vehicle and the vehicle accessory. Measuring the amount of transferred energy may comprise monitoring the number of recharge events and corresponding energy transfers between the vehicle and the vehicle accessory in each direction.

In some embodiments, prior to calculating the cost of the transferred energy, the method comprises detecting energy transfer has been disabled between the vehicle and the vehicle accessory in one or both directions. Ways of detecting energy transfer has been disabled between the vehicle and the vehicle accessory in one or both directions include, for example, determining that the energy transfer connection 18 has been broken between the vehicle and vehicle accessory. This could be determined directly or indirectly, for example, if the vehicle senses the vehicle accessory or vice versa is now further than a predetermined distance exceeding the length of the maximum length of physical connection 18 or if some other location technique is used. In some embodiments, calculating the cost for the transferred energy further comprises transmitting, using one or more wireless data communication links 22a, 22b, an indication of the measured amount of transferred energy to a remote server 20 and, at the remote server 20 receiving from each of the vehicle and vehicle accessory, a transmitted indication of the measured amount of transferred energy; and calculating the cost for the vehicle and vehicle accessory based on the received indication of the amount of transferred energy in a given time period for each of the vehicle and the vehicle accessory and transmitting an indication of the cost to each party associated with either the vehicle and/or the vehicle accessory.

The method may transmit the cost indication to initiate an electronic payment for an energy transaction to two or to more than two parties if there are more than two vehicles/vehicle accessories involved in an energy transaction. For example, vehicle A may transfer energy X to vehicle C via vehicle accessory B in a convoy, and in some examples, only the party or entity owning vehicle C may be charged by the party or entity owning vehicle A/controlling its energy transfer service. However, in some examples, the entity owning/controlling vehicle B may levy an additional charge for the transfer through its energy infrastructure. Accordingly, the method may involve initiating an electronic payment transaction with a cost indication to each party involved in the consumption of energy using a predetermined protocol in some embodiments.. This may also include an automatic price negotiation between a party owning the energy source and a party consuming the energy source. In the case where energy may be transferred from a vehicle or vehicle accessory to at least one other vehicle or vehicle accessory, and which may be transferred onwards via that at least one other vehicle or vehicle accessory to another vehicle or vehicle accessory, the price negotiations may involve an intermediary party, so that multiple parties negotiate pricing before any electronic payment is made.

In some embodiments, the energy price per unit of energy is negotiated electronically in real-time prior to the energy exchange the as part of the energy transaction where both entities have a target price, a minimum selling and a maximum buying price which may be stored in association with their billing account information either locally on-board the vehicle(s) or vehicle accessory(ies) that each entity or remote, e.g. in the cloud. The price negotiation any suitable protocol, for example, it may start from a target selling / buying price and converge buy common value step. If the parties cost negotiations can't converge and the energy needed by each entity to complete the mission of each entity is not enough, then in some embodiments an alert is raised to a driver of a vehicle/ back office / fleet supervisor so that either the convoy stops at a suitable point or so that the convoy does not set off on its mission. This negotiation does not, however, have to be done in real-time if each entity has already agreed a pre-negotiated price.

In some embodiments, each energy exchange is stored as a certified transactions in the remote server 22. For example, block chains or other forms to authenticate an energy transaction is valid may be used in some embodiments. Authenticating the energy transaction allows subsequent billing of relevant parties to be conducted automatically without requiring further human involvement allowing electronic settlement of payments to take place automatically.

In some embodiments, the vehicle comprises a heavy-duty vehicle and the vehicle accessory comprises one or more of a heavy-duty vehicle trailer and a container. In some embodiments, the vehicle (10) comprises a heavy-duty vehicle and is configured to exchange energy with one or more other vehicles and/or vehicle accessories (12) arranged to move as a convoy.

The vehicle 10 shown in Figure 1 and described herein above may be configured to implement the method 100 in some embodiments however, in some embodiments, the vehicle 10 performs part of the method with one or more of the vehicle accessory 12 and the server 20 performing other parts of the method. Alternatively, the method may be performed by the vehicle accessory 12 in some embodiments and/or by the server 20 in some embodiments.

Figure 3 shows schematically a server 20 configured to perform method 100 in some embodiments of the disclosed technology.

In some embodiments, server 20 receives from each of at least one vehicle 10 and a vehicle accessory 12, a transmitted indication of a measured amount of energy transferred between the vehicle 10 and vehicle accessory 12 in either direction, for example, a vehicle 10 and/or vehicle accessory configured to implement a method of automatically billing an energy exchange as disclosed herein. Based on this the server calculates a cost for the vehicle 10 and vehicle accessory 12 based on the received indication of the amount of transferred energy in a given time period in each direction for each of the vehicle and the vehicle accessory and then determines transmit an indication of the cost to one or more parties who are associated with the vehicle 10 and/or the vehicle accessory 12. This means that the energy transfer price is not based only on the net energy transferred in some embodiments. In other words, if a vehicle 10 obtains X amount of power from vehicle accessory 12 at time point a within a 24 hour period, but later in that period at time point b, the vehicle accessory requests Y amount of power back from vehicle 10, for the 24 hour period whilst the total amount of power transferred from the vehicle accessory 12 to vehicle 10 may be X-Y, this does not necessarily result in the entity associated with vehicle Y being automatically billed for (X-Y) multiplied by a single tariff amount. The energy price per unit of energy transferred may not be the same in each direction, and it may also vary depending on other factors, for example, the time of day when the energy transfer takes place, the location of the energy transfer (which may be impacted by taxes for example). In other words, even if the agreed "energy transfer unit price" is the same in each direction, if a vehicle borrows X units of energy in country A the final bill for the energy transfer may need, for example to includes an amount for taxes which are different if the vehicle accessory were to later borrow back Y units of energy in country B where the taxes are different.

Some embodiments of the energy exchange system is configured to automatically bill bi-directional exchanges of energy occurring over a predetermined time interval between or to one or more entities. Such a system may comprise at least one vehicle according to any one of the disclosed vehicle embodiments, at least one vehicle accessory according to any one of the disclosed vehicle accessory embodiments, and a server according to any one of the disclosed server embodiments. For example, the server may be configured to receive from each of a vehicle 10 and a vehicle accessory 12, a transmitted indication of a measured amount of energy transferred between the vehicle and vehicle accessory in either direction. The server 20 is also configured to calculate the cost for the vehicle and vehicle accessory based on the received indication of the amount of transferred energy in a given time period for each of the vehicle and the vehicle accessory and transmits an indication of the cost to each entity associated with either the vehicle and/or the vehicle accessory.

In some embodiments, the energy exchange system further comprises for each vehicle and each accessory an associated entity and wherein the server is configured to transmit an indication of the cost to at least one, both or all entities at the end of each predetermined time interval and requests electronic settlement.

As shown in Figure 3, server 20 comprises memory 46, one or more processors or processing circuitry 48, and a suitable antenna/receiver/transmitter 50 for wirelessly communicating with one or more vehicles 10 and/or vehicle accessories 12. It may also include a controller 54 for controlling the internal components of the server 12, for example, so as to send and receive of data over the antenna/receiver/transmitter arrangement 50. Server 12 may be a back-office server for a fleet of one or more vehicles 10 and/or vehicle accessories 12 in some embodiments.

Memory 46 also includes computer-program code or circuitry 52 comprising a plurality of modules M1, M2, M3 and M4 which, when loaded from memory and executed by the one or more processors cause a control system of the server to implement the method 100. For example, in some embodiments, module M1 is comprise computer code or circuitry for detecting a type of vehicle accessory, module M2 comprises computer code or circuitry for enabling energy transfer, module M3 comprises computer code or circuitry for measuring an amount of transferred energy, and module M4 comprises computer code or circuitry for calculating a cost of transferred energy.

In some embodiments, the server 20 may comprise one or more additional modules of computer code which, when loaded from memory and executed by the one or more processor(s) or processing circuitry cause the server 20 to transmit via a suitable antenna and transceiver arrangement 50 a message comprising a cost indication and a request for settlement of the cost to an entity associated with the vehicle and/or vehicle accessory which has incurred the cost, where the entity has authority to settle electronic transaction invoices directly with the server.

The computer code 52 may be provided as a computer program product which when loaded from memory and executed by one or more processors 30, 40, of a controller or control circuitry 26, 36 of a vehicle or vehicle accessory causes the vehicle to implement an embodiment of method 100 disclosed herein above.

Some, if not all, of the above embodiments may be implemented using computer code which may be provided as a computer program product comprising the computer program, for example, a computer algorithm, in the form of software and/or hardcoded in circuitry. The computer program product may installed in and/or configured to be used by, a device which can be mounted on or integrated in a vehicle or vehicle accessory and configured to connect and interact with the controller of the vehicle or vehicle accessory so as to allow the method 100 to be implemented by the vehicle and/or vehicle accessory jointly with the device when it is suitable connected.

The program code mentioned above may also be provided as a computer program product, for instance in the form of a data carrier. The data carrier, or computer readable medium, may be one of an electronic signal, optical signal, radio signal or computer-readable storage medium.

The computer program code may e.g. be provided as pure program code in the control unit or on a server and downloaded to the control unit. Thus, it should be noted that the functions of the control unit may in some embodiments be implemented as computer programs stored in memory, for example, a computer readable storage unit, for execution by processors or processing modules, e.g. the processing circuitry of a controller 26, 36, 54 of Figures 1 or 3.

Those skilled in the art will also appreciate that the processing circuitry and the memory or computer readable storage unit described above may refer to a combination of analog and digital circuits, and/or one or more processors configured with software and/or firmware, e.g. stored in a memory, that when executed by the one or more processors such as the processing circuitry perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

The controllers 26, 36, 54 may also comprise or be capable of controlling how signals are sent wirelessly via the transceiver/antenna arrangements 34, 42, 50 in order for the vehicle 10, vehicle accessory 12, and server 20 respectively to communicate via one or more communications channels with each other and also, in some embodiments, the entities responsible for the electronic settlement of energy exchange charges incurred by the vehicle(s) 10 and vehicle accessory(ies) 12.

An example of a server may be a back office server for a fleet of vehicles and their vehicle accessories which operate within a defined area/along defined routes.

The communication channels may be point-to-point, or networks, for example, over cellular or satellite networks which support wireless communications. The wireless communications may conform to one or more public or proprietary communications standards, protocols and/or technologies, including but not limited to Global System for Mobile Communications (GSM), Enhanced Data GSM Environment (EDGE), high-speed downlink packet access (HSDPA), wideband code division multiple access (W-CDMA), code division multiple access (CDMA), time division multiple access (TDMA), long term evolution (LTE), Bluetooth, Wireless Fidelity (Wi-Fi) (e.g., IEEE 802.11a, IEEE 802.11b, IEEE 802.11g and/or IEEE 802.11 n), voice over Internet Protocol (VoIP), Wi-MAX, a protocol for email (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), and/or Instant Messaging and Presence Service (IMPS)), and/or Short Message Service (SMS)), or any other suitable communication protocol, including communication protocols not yet developed as of the filing date of this document.

The operating system of the vehicle may further various software components and/or drivers for controlling and managing general system tasks (e.g., memory management, storage device control, power management, etc.) and facilitates communication between various hardware and software components.

Where the disclosed technology is described with reference to drawings in the form of block diagrams and/or flowcharts, it is understood that several entities in the drawings, e.g., blocks of the block diagrams, and also combinations of entities in the drawings, can be implemented by computer program instructions, which instructions can be stored in a computer-readable memory, and also loaded onto a computer or other programmable data processing apparatus. Such computer program instructions can be provided to a processor of a general purpose computer, a special purpose computer and/or other programmable data processing apparatus to produce a machine, such that the instructions, which execute via the processor of the computer and/or other programmable data processing apparatus, create means for implementing the functions/acts specified in the block diagrams and/or flowchart block or blocks.

In some implementations and according to some aspects of the disclosure, the functions or steps noted in the blocks can occur out of the order noted in the operational illustrations. For example, two blocks shown in succession can in fact be executed substantially concurrently or the blocks can sometimes be executed in the reverse order, depending upon the functionality/acts involved. Also, the functions or steps noted in the blocks can according to some aspects of the disclosure be executed continuously in a loop.

The description of the example embodiments provided herein have been presented for the purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatus, modules, systems, and computer program products. It should be appreciated that the example embodiments presented herein may be practiced in any combination with each other.

It should be noted that the word "comprising" does not necessarily exclude the presence of other elements, features, functions, or steps than those listed and the words "a" or "an" preceding an element do not exclude the presence of a plurality of such elements, features, functions, or steps. It should further be noted that any reference signs do not limit the scope of the claims, that the example embodiments may be implemented at least in part by means of both hardware and software, and that several "means", "units" or "devices" may be represented by the same item of hardware.

The various example embodiments described herein are described in the general context of methods, and may refer to elements, functions, steps or processes, one or more or all of which may be implemented in one aspect by a computer program product, embodied in a computer-readable medium, including computer-executable instructions, such as program code, executed by computers in networked environments.

A computer-readable medium may include removable and non-removable storage devices including, but not limited to, Read Only Memory (ROM), Random Access Memory, RAM), which may be static RAM, SRAM, or dynamic RAM, DRAM. ROM may be programmable ROM, PROM, or EPROM, erasable programmable ROM, or electrically erasable programmable ROM, EEPROM. Suitable storage components for memory may be integrated as chips into a printed circuit board or other substrate connected with one or more processors or processing modules, or provided as removable components, for example, by flash memory (also known as USB sticks), compact discs (CDs), digital versatile discs (DVD), and any other suitable forms of memory. Unless not suitable for the application at hand, memory may also be distributed over a various forms of memory and storage components, and may be provided remotely on a server or servers, such as may be provided by a cloud-based storage solution. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

The memory used by any apparatus whatever its form of electronic apparatus described herein accordingly comprise any suitable device readable and/or writeable medium, examples of which include, but are not limited to: any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry. Memory may store any suitable instructions, data or information, including a computer program, software, an application including one or more of logic, rules, code, tables, etc. and/or other instructions capable of being executed by processing circuitry and, utilized by the apparatus in whatever form of electronic apparatus. Memory may be used to store any calculations made by processing circuitry and/or any data received via a user or communications or other type of data interface. In some embodiments, processing circuitry and memory are integrated. Memory may be also dispersed amongst one or more system or apparatus components. For example, memory may comprise a plurality of different memory modules, including modules located on other network nodes in some embodiments.

In the drawings and specification, there have been disclosed exemplary aspects of the disclosure. However, many variations and modifications can be made to these aspects which fall within the scope of the accompanying claims. Thus, the disclosure should be regarded as illustrative rather than restrictive in terms of supporting the claim scope which is not to be limited to the particular examples of the aspects and embodiments described above. The invention which is exemplified herein by the various aspects and embodiments described above has a scope which is defined by the following claims.

## Claims

1. A computer-implemented method for automatically electronically billing an energy exchange between at least one vehicle (10) and at least one vehicle accessory (12), where the method comprises, at one or more of the vehicle (10), the vehicle accessory (12), and a remote server (20):
detecting (102) the type of vehicle or vehicle accessory;
enabling (104) energy transfer between one or more energy stores (14) of the vehicle and one or more energy stores (16) of the vehicle accessory in one or both directions;
measuring (106) the amount of transferred energy; and
calculating (108) the cost for the transferred energy.

2. The method of claim 1, wherein the vehicle accessory is a trailer or a container.

3. The method of claim 1 or 2, wherein the enabling energy transfer (104) is responsive to the vehicle or the vehicle accessory detecting an energy transfer connection (18) capable of transferring energy between the vehicle and the vehicle accessory has been formed between the vehicle and the vehicle accessory.

4. The method of any one of the previous claims, wherein measuring the amount of transferred energy comprises monitoring the number of recharge events and corresponding energy transfers between the vehicle and the vehicle accessory in each direction.

5. The method of any one of the previous claims, wherein the method further comprises, prior to calculating the cost of the transferred energy, detecting energy transfer has been disabled between the vehicle and the vehicle accessory in one or both directions.

6. The method of claim 5, wherein detecting energy transfer has been disabled between the vehicle and the vehicle accessory in one or both directions comprises determining that the energy transfer connection (18) has been broken between the vehicle and vehicle accessory.

7. The method of any previous claim, wherein calculating the cost for the transferred energy further comprises:
transmitting, by the vehicle (10) or vehicle accessory (12), using one or more wireless data communication links (22a, 22b), an indication of the measured amount of transferred energy to a remote server (20); and,
at the remote server (20):
receiving from each of the vehicle and vehicle accessory, a transmitted indication of the measured amount of transferred energy;
calculating the cost for the vehicle and vehicle accessory based on the received indication of the amount of transferred energy in a given time period for each of the vehicle and the vehicle accessory; and
initiating an electronic payment energy transaction by transmitting an indication of the cost to each party associated with either the vehicle and/or the vehicle accessory.

8. The method of claim 7, wherein the energy transactions are certified and stored in the remote server (20).

9. The method of any one of the previous claims, wherein the vehicle (10) comprises a heavy-duty vehicle and is configured to exchange energy with one or more other vehicles and/or vehicle accessories (12) arranged to move as a convoy.

10. A vehicle (10) configured to implement a method according to any one of claims 1 to 9.

11. A vehicle accessory (12) configured to implement a method according to any one of claims 1 to 9.

12. A server (20) configured to:
receive from each of a vehicle (10) and a vehicle accessory (12), a transmitted indication of a measured amount of energy transferred between the vehicle and vehicle accessory in either direction; and
calculate the cost for the vehicle and vehicle accessory based on the received indication of the amount of transferred energy in a given time period for each of the vehicle and the vehicle accessory; and
transmit an indication of the cost to each entity associated with either the vehicle and/or the vehicle accessory.

13. A server (20) according to claim 12, wherein the vehicle (12) comprises a vehicle according to claim 10 and the vehicle accessory comprises a vehicle accessory according to claim 11.

14. An energy exchange system for automatically billing bi-directional exchanges of energy occurring over a predetermined time interval to one or more entities, the system comprising:
at least one vehicle according to claim 10;
at least one vehicle accessory according to claim 11; and
a server according to claim 12.

15. An energy exchange system according to claim 14, wherein the energy exchange system further comprises for each vehicle and each accessory an associated entity and wherein the server is configured to transmit an indication of the cost to at least one, both or all associated entities at the end of each predetermined time interval and requests electronic settlement.

16. A computer program product comprising computer-code which when loaded from memory and executed by one or more processors of a control circuit of a vehicle (10) or vehicle accessory (12), causes the vehicle (10) and vehicle accessory (12) to implement a method according to any one of claims 1 to 9.
